# EUROPEAN PATENT APPLICATION

(11) **EP 4 707 174 A1**
(43) Date of publication of application: **11.03.2026**
(21) Application number: 25198783.0
(22) Date of filing: 28.08.2025
(51) Int. Cl.: B64D 27/12, B64D 27/18, B64D 27/40, B64D 29/08

(54) **PROPULSION SYSTEM FOR AN AIRCRAFT COMPRISING AN ENGINE, A PYLON AND A STRUCTURAL ENGINE DUCT**

(30) Priority: 06.09.2024 US 202463691580 P
(71) Applicant: AIRBUS OPERATIONS (S.A.S.), 31060 Toulouse (FR)
(72) Inventor: GOUGEON, Pascal, 31060 TOULOUSE (FR); BELLANGER, Alexandre, 31060 TOULOUSE (FR); SILLIERES, Lionel, 31060 TOULOUSE (FR); VANDERBAUWEDE, Simon, 31060 TOULOUSE (FR); CHARTON, Nicolas, 31060 TOULOUSE (FR); VINOT, Julien, 31060 TOULOUSE (FR); CARCENAC, Xavier, 31060 TOULOUSE (FR); AYRAL, David, 31060 TOULOUSE (FR)
(74) Representative: Cabinet Le Guen Maillet

(57) **Abstract**

The inventions relates to a propulsion system comprising an engine made of two parts, namely an engine casing and an engine core, a pylon box configured to assemble the engine to the aircraft structure where a structural duct comprises a fixed structure, the fixed structure comprising at least an upper beam and a rear ring, the upper beam being fixed to the engine casing and the ring being fixed to the upper beam at 12 o'clock and to the pylon box, and, panels being mounted on the upper beam in order to form a closed barrel surrounding, at least partly, the engine core and being configured to transfer loads from the engine casing to the pylon box.

## Description

### TECHNICAL FIELD

The present invention relates to the general field of attachment of an engine under the wing of an aircraft. It concerns in particular a propulsion system comprising an engine, in particular a double-flow engine, a pylon and a structural attachment allowing load transfer to the aircraft structure through the pylon. It also applies to an aircraft equipped with such a propulsion system.

### RELATED ART

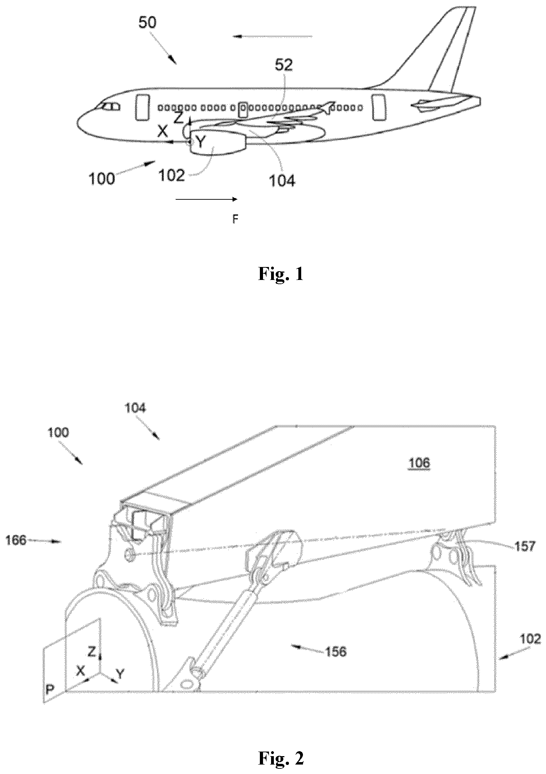

With reference to FIG. 1, an aircraft 50 comprises a plurality of propulsion system 100 having an engine each surrounded by a nacelle 102 at least partly that are positioned beneath the wing 52 of the aircraft 50. These attachment elements often consist of a front engine attachment and a rear engine attachment, here both to a pylon 104.

As shown on figure 2, the propulsion system 100 comprises an engine, a nacelle 102 positioned at least partly around the engine and also the pylon 104 that provides the connection between the engine and the rest of the aircraft 50, in particular the wing 52. The pylon 104 comprises a primary structure 106 in the form of a box that is connected to the engine by a front engine attachment 166, a rear engine attachment 157 and a pair of rods 156 that react the forces.

Although such a structure is satisfactory, it is desirable to find an alternative arrangement that allows, among other things, a better transfer of loads towards the rear of the pylon.

The aim of the present invention is to propose an alternative to such propulsion system.

### SUMMARY OF THE INVENTION

An object of the invention is to provide an arrangement that allows a better transfer of loads.

To this end, it is proposed a propulsion system comprising: an engine made of two parts, the two parts comprising an engine casing and an engine core, a pylon box configured to assemble the engine to an aircraft structure where a structural duct comprises a fixed structure, the fixed structure comprising at least an upper beam and a rear ring, the upper beam being fixed to the engine casing and the ring being fixed to the upper beam at 12 o'clock and to the pylon box, and, panels being mounted on the upper beam in order to form a closed barrel surrounding, at least partly, the engine core and being configured to transfer loads from the engine casing to the pylon box.

The propulsion system can comprise the additional features, considered alone or in combinations:
- The upper beam is provided with hinges on which the panels are articulated in order to rotate around a longitudinal line L orientated along a X axis.
- The lower sides of the panels are attached to one another.
- The fixed structure comprises a lower beam attached to the engine casing and the ring at 6 o'clock.
- The panels are attached to the lower beam through latches.
- The upper beam has the shape of a box.
- The upper beam comprises three spars linked with upper and lower skins to form the box.
- The centering rods are provided to maintain the engine core, the centering rods positioned to form a triangle, each end of the centering rods being attached to the ring, and the engine core being attached to each of the centering rods.
- Each spar is attached to a stringer of the engine casing.

Another object of the invention is an aircraft comprising a propulsion system as described herein-above.

### BRIEF DESCRIPTION OF THE DRAWINGS

[Fig. 1] is a side view of an aircraft provided with a propulsion system;
[Fig. 2] is a partial view in perspective of a propulsion system according to a prior art;
[Fig. 3] is a schematic view of the two global parts of an engine;
[Fig. 4] is a view in perspective of a propulsion system according to the present invention with a closed mobile structure;
[Fig. 5] is a view in perspective where the mobile structure has been removed;
[Fig. 6] is a side view of the propulsion system according to an embodiment, with a closed mobile structure;
[Fig. 7] is a section drawing according to plane H3 of Fig. 6;
[Fig. 8] is a section drawing according to planes H1/H2 of Fig. 6;
[Fig. 9] is a schematic view of the loads transfer in the propulsion system according to an embodiment;
[Fig. 10] is a view in perspective of a propulsion system according to an embodiment with an opened mobile structure with no lower beam within the fixed structure;
[Fig. 11] is a drawing section according to plane A-A of Fig. 6; and,
[Fig. 12] is a partial view in perspective showing in transparency stringers of the engine casing.

### DETAILED DESCRIPTION OF AT LEAST ONE EMBODIMENT

For the remainder of the description, a longitudinal direction X is parallel to the axis of the engine. A transverse plane is a plane perpendicular to the longitudinal direction X. A transverse and horizontal direction Y is a direction perpendicular to the longitudinal direction X and horizontal. A transverse and vertical direction Z is a direction perpendicular to the longitudinal direction X and vertical. A vertical median plane is a plane parallel to the direction X and containing the engine axis. The terms front and rear refer to the direction of flow F (indicated by an arrow F on Fig. 1) of the stream of air in the engine, this stream flowing from the front towards the rear.

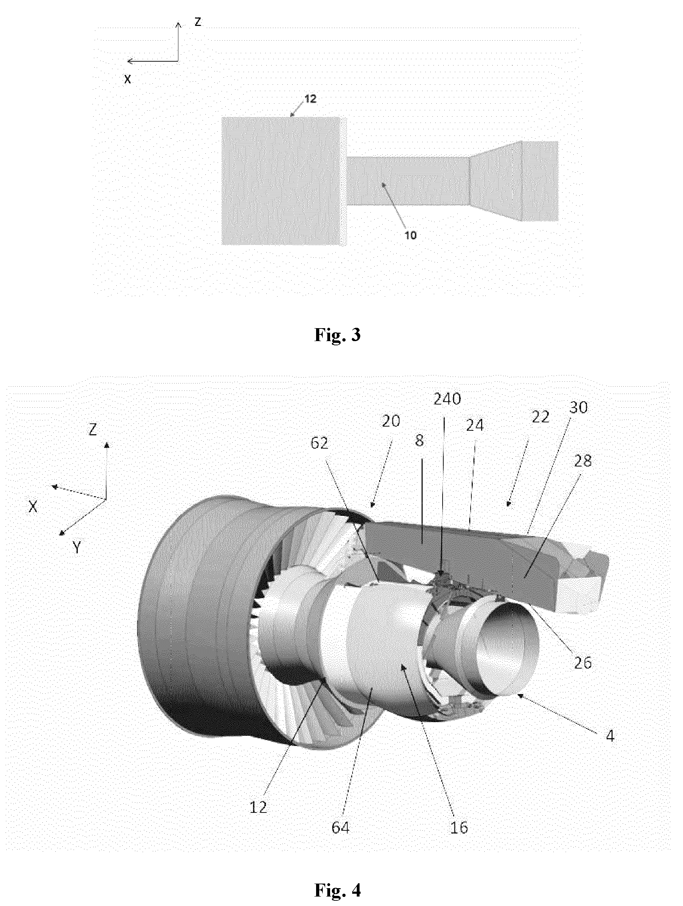

Turning to Fig. 3 and Fig. 4, the aircraft 50 comprises a plurality of engines 4 that are positioned beneath the wing 52 of the aircraft 50 (same figure as Fig. 1 but with the propulsion system described hereunder in reference to Fig. 3 to Fig. 11).

A propulsion system comprises an engine 4 and a pylon 8 box that provides the connection between the engine 4 and the wing 52 of the aircraft 50. As illustrated on Fig. 3, the engine comprises globally two parts, what we call an engine core 10 and the engine casing 12 at the front of the engine core. The engine casing 12 is the part that surrounds or maintains the fan(s) of the engine depending on the type of engine (turbojet (for example double flow/bypass turbojet as turbofan), unducted fan engine (as open rotor, a propfan, etc.)). The engine core 10 is the rest of the engine not at the level of the propulsive fan(s). The structural duct 16 described hereunder is surrounding at least partly the engine core 10.

The pylon box 8 comprises a primary structure comprising two parts: a front part 20 mainly linked to the engine through an attachment set which will not be described in detail as it is not part of the present invention and a rear part 22 mainly joined to the aircraft and in particular to the wing through a wing attachment system. The pylon box 8 is in the form of a box comprising an upper spar 24, a lower spar 26, and two lateral panels 28, 30 to form the pylon box 8.

The duct 16 of the present invention is a structural duct allowing to transfer loads from the engine to the aircraft structure, here the wing through the pylon. The duct 16 is made of a fixed structure 62 and a mobile structure 64.

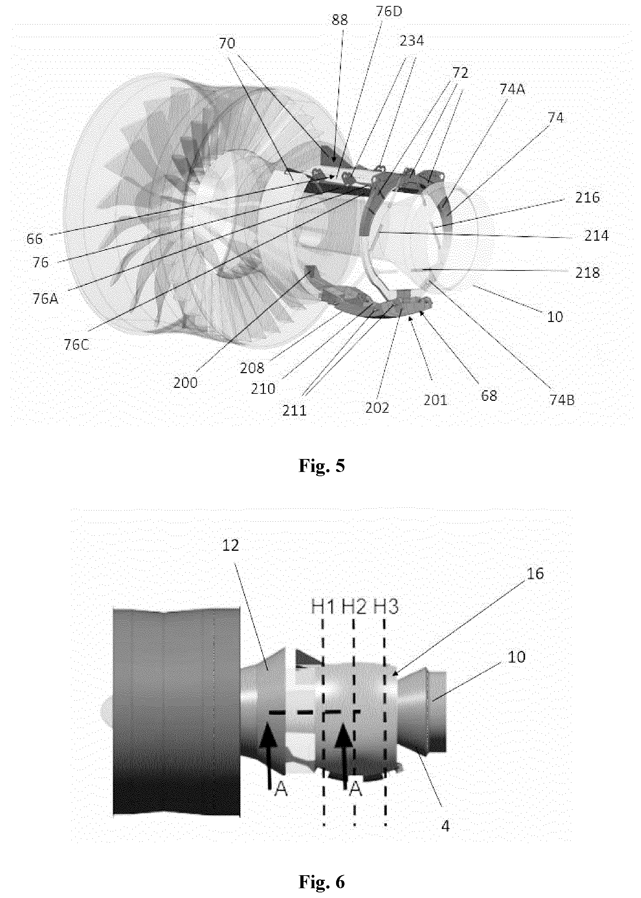

The fixed structure 62 of the duct 16 comprises an upper beam 66 and optionally a lower beam 68 (see Fig. 5). The upper beam 66 of the duct 16 is attached to the engine casing 12 on its front side and on its rear side to the rear part 22 of the pylon. The front end 70 of the upper beam 66 is linked to the engine casing 12 and its rear end 72 to an annular frame 74 called ring 74 which is linked to the pylon 8.

In the illustrated embodiment, the ring 74 is made of two dismountable upper (74A) and lower (74B) half rings: the upper half ring 74A and the lower half ring 74B are attached to one another to form said one piece ring 74 through dismountable fixing means (not shown as of the known type) allowing loads transfer. It allows to separate both the lower half ring and the lower beam (when there is a lower beam) from the rest of the propulsion system.

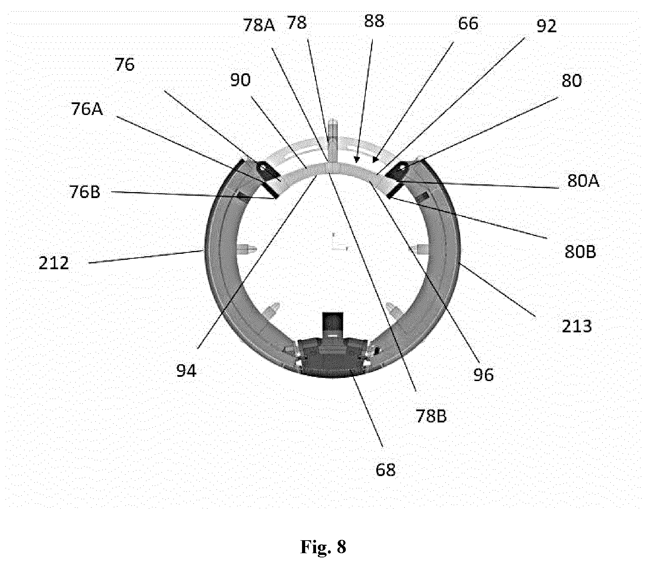

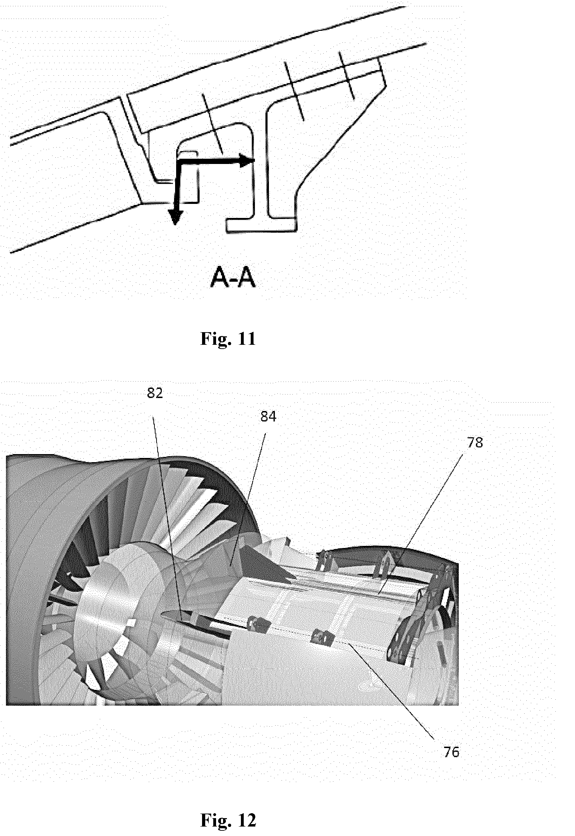

In the present embodiment, and as better seen on Fig. 8, the upper beam 66 is made of three longitudinal spars 76, 78, 80: one central spar 78 at 12 o'clock in the vertical median plane YZ of symmetry and two lateral spars 76, 80 on both sides of the central spar 78. Each spar in the present embodiment has a parallelepipedal section with four faces: for example, the spar 76 has an upper face 76A, a lower face 76B and two lateral faces 76C and D (see Fig. 5 and Fig. 8) (same for each spar). In the present embodiment also, as shown on Fig. 5, the front end of each spar 76, 78, 80 is attached to a respective stringer 82, 84 (two of them are shown in transparency on Fig. 12) of the engine casing 12.

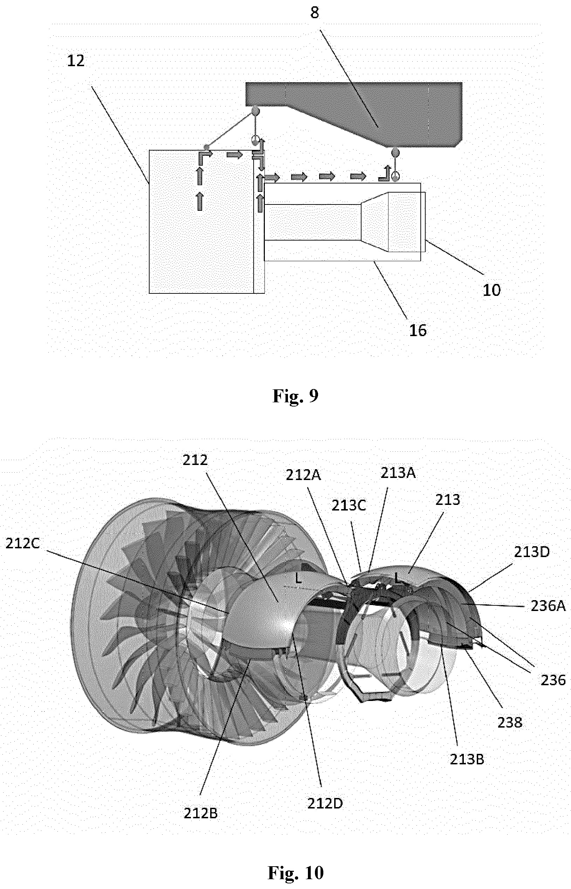

This provides a strong attachment allowing the transfer of charges illustrated by little arrows on Fig. 9 from the engine casing 12 to the pylon 8 through the duct 16.

In order to increase the inertia of the upper beam 66, the spars 76, 78, 80 are linked to create a box 88 (see Fig. 5 and Fig. 8). As can be seen on Fig. 8, the upper face 76A, 80A of the lateral spars 76, 80 are linked to the upper face 78A of the central spar 78 through a respective upper skin 90, 92. The lower face 76B, 80B of the lateral spars are linked to the lower face 78B of the central spar 78 through a respective lower skin 94, 96.

The skins 90, 92, 94, 96 are curved to follow the profile of the engine core 10 and the global profile of the duct 16. The box is completely closed with at one of his longitudinal ends the engine casing 12 and at the other longitudinal end the ring 74. However, some other embodiments are possible: in the illustrated one, the skins 90, 92, 94, 96 are not in the extension of the panels: it follows a flattened shape compared to the global profile of the duct in order to let enough space between the upper beam and the pylon.

Optionally, the fixed structure 62 of the duct 16 comprises a lower beam 68. As shown on Fig. 5 and Fig. 8, said lower beam 68 is positioned at 6ok in the vertical median plane YZ. Said lower beam 68 comprises an elongated longitudinal surface 201 with a double curvature to follow the profile of the duct 16 aimed at following the contours of the engine core: its front end 200 is attached to the engine casing 12 and more precisely to a stringer of the engine casing. Its rear end 202 is attached to the lowest part of the ring 74 or can even be part of the lowest part of the ring: those strong front and rear attachment allows loads to be transferred from the engine casing to the pylon through the lower beam and ring. The lower beam 68 comprises lateral edges 208, 210 in a radial direction allowing to support latch 211 to lock lateral rotative panels 212, 213 (see Fig. 8) on the lower beam 68 described later on. As indicated, the lower beam is optional as the lateral panels 212, 213 could be lock to one another (see Fig. 10). The lock through one or more latches associated with pins and bumpers will not be described as already known. Any other types of latches appropriate to such configuration could be used.

Optionally, as shown in Figs 4, 5, 7 and 10, three centering rods 214, 216, 218 can be provided to alleviate the inertial loads of the cantilevered core engine 10. Those rods 214, 216, 218 are positioned in a transverse plane YZ to form a triangle around the core engine 10. Each rod is attached to the engine core approximatively in the middle part of said rods: those rods allow to limit the displacements of the engine. Each extremity 220, 222 of the lower rod 218 oriented in a transverse Y direction is attached to the lower part of the ring 74. One extremity 224, 226 of the two other lateral rods 214, 216 (of the two other sides of the triangle) is attached to the lower part of the ring near the lower rod 218 and the other extremities 228, 230 to the upper part of the ring near one another.

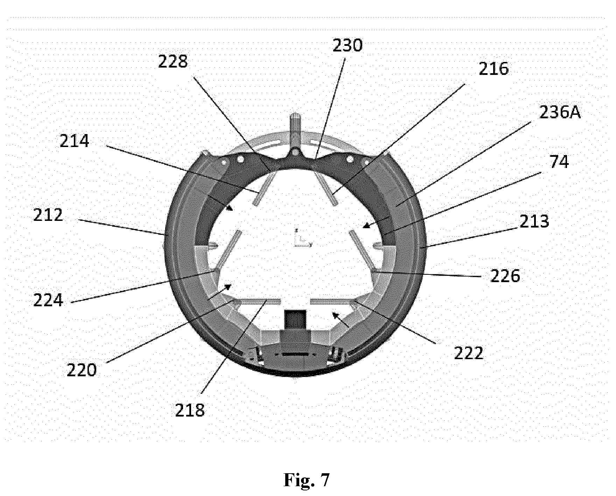

The upper beam 66 is provided with hinges 234 (Fig 5). The mobile structure of the duct 16 comprises panels 212, 213 (Figs 7, 8, 10) which are articulated to the hinges 234. The panels 212, 213 comprises four sides: as illustrated on Fig 10, an upper side 212A, 213A, a lower side 212B, 213B, a front side 212C, 213C and a rear side 212D, 213D. The upper side 212A, 213A is linked to the upper beam 66 so that the panel can rotate around a line L oriented in a longitudinal X direction. The attachment to the hinges is such that loads are transferred from the upper beam to the panels. As shown in Figs 4 and 10, the panels can move between a closed position shown on Fig 4 and an opened deployed position shown on Fig 10 allowing an operator to have an easy access to the core engine 10. The panels are provided with ribs 236 in the transverse Y direction and ribs 238 in the X longitudinal direction. The transverse ribs 236 are the one articulated on hinges 234 so that the panel rotates around a line L in a X direction. Regarding the lower side 212B, 213B of the panel, as already mentioned, two alternatives are possible. In one case, the lower side is locked to a lower beam through classical latch. In another case, the lower side of the two panels are locked to one another.

The front side 212C, 213C of the panels are linked to the engine casing through a classical J ring / V groove locking which is illustrated on Fig 11.

Regarding the rear side 212D, 231D, as can be seen from the Fig. 7 and Fig. 10, one of the transverse ribs 236A is facing the ring 74 so that when in closed position the rib 236A is pushing/pressing the ring 74 (as shown by arrows on Fig 7) in order to transfer the loads from the panel to the ring. Any other mechanical known links can be used to connect the panels to the fixed structure and engine casing. For example, for the link between the panel and the ring, a J ring/V groove as on Fig 11 could have been applied or even a latch as for the link between the panel and lower beam.

Once the panels are in a closed position, the duct 16 shall be a complete 360° barrel surrounding the core engine and transferring the loads to the aircraft structure.

The fixed and mobile structures can be provided with acoustic panel and made of a fire protection material.

The structural duct 16 of the present invention combines multiple functions: aerodynamic surface, acoustic treatment, fire barrier, load transfer from engine to pylon, easy and rapid access to engine core for maintenance. There is no need of ground support equipment and the risk to damage duct, engine or aircraft is decreased.

As illustrated on Fig 4, a classical pylon attachment system 240 is provided to link the ring to the pylon.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

## Claims

1. A propulsion system (100) of an aircraft comprising: an engine (4) made of two parts (10, 12), the two parts comprising an engine casing (12) and an engine core (10), a pylon box (8) configured to assemble the engine (4) to an aircraft structure where a structural duct comprises a fixed structure (62), the fixed structure comprising at least an upper beam (66) and a rear ring (74), the upper beam (66) being fixed to the engine casing (12) and the rear ring (74) being fixed to the upper beam (66) at 12 o'clock and to the pylon box (8), and, panels being mounted on the upper beam in order to form a closed barrel surrounding, at least partly, the engine core (10) and being configured to transfer loads from the engine casing (12) to the pylon box (8).

2. The propulsion system (100) according to claim 1, wherein the upper beam (66) is provided with hinges (234) on which the panels are articulated in order to rotate around a longitudinal line L orientated in parallel to a longitudinal X axis of said aircraft.

3. The propulsion system (100) according to claim 2 wherein lower sides of the panels are attached to one another.

4. The propulsion system (100) according to either claims 1 or 2, wherein the fixed structure comprises a lower beam (68) attached to the engine casing and the ring at 6 o'clock.

5. The propulsion system according to claim 4, wherein the panels are attached to the lower beam through latches.

6. The propulsion system (100) according to any one of claims 1 to 5, wherein the upper beam (66) has a shape of a box.

7. The propulsion system (100) according to claim 6, wherein the upper beam comprises (66) three spars (76, 78, 80) linked with upper and lower skins to form the box.

8. The propulsion system (100) according to any one of claims 1 to 7, wherein centering rods (214, 216, 218) are provided to maintain the engine core (10), the centering rods (214, 216, 218) positioned to form a triangle, each end of the centering rods being attached to the rear ring (74), and the engine core (10) being attached to each of the centering rods.

9. The propulsion system (100) according to claim 7, wherein each spar (76, 78, 80) is attached to a stringer (82, 84) of the engine casing (10).

10. An aircraft (50) comprising a propulsion system (100) according to any one of claims 1 to 9.
